(19) Europäisches Patentamt
European Patent Office
Office européen des brevets

(11) **EP 1 437 688 B1**

(12) **EUROPEAN PATENT SPECIFICATION**

(45) Date of publication and mention
of the grant of the patent:
**28.11.2007 Bulletin 2007/48**

(51) Int Cl.:
***G06T 15/40*** (2006.01)

(21) Application number: **04075574.6**

(22) Date of filing: **18.02.1999**

(54) **Raycasting system and method**

System und Verfahren zur Strahlverfolgung

Système et méthode de lancer de rayons

(84) Designated Contracting States:
**BE DE FR GB IT NL SE**

(30) Priority: **23.02.1998 US 75519**

(43) Date of publication of application:
**14.07.2004 Bulletin 2004/29**

(62) Document number(s) of the earlier application(s) in
accordance with Art. 76 EPC:
**99906420.7 / 1 058 914**

(73) Proprietor: **Algotec Systems Ltd.
Raanana 43000 (IL)**

(72) Inventors:
• **Akerman, Schmuel
52533 Ramat Gan (IL)**
• **Miller, Gad
42940 Kfar Yedidia (IL)**

(74) Representative: **van Westenbrugge, Andries et al
Nederlandsch Octrooibureau
Postbus 29720
2502 LS Den Haag (NL)**

(56) References cited:
• **DILLENSEGER J L ET AL: "An Integrated Multi-purpose Ray Tracing Framework For The Visualization Of Medical Images" ENGINEERING IN MEDICINE AND BIOLOGY SOCIETY, 1991. VOL.13: 1991., PROCEEDINGS OF THE ANNUAL INTERNATIONAL CONFERENCE OF THE IEEE ORLANDO, FL, USA 31 OCT.-3 NOV. 1991, NEW YORK, NY, USA,IEEE, US, 31 October 1991 (1991-10-31), pages 1125-1126, XP010101788 ISBN: 0-7803-0216-8**

## Description

### RELATED APPLICATIONS

The present application claims the benefit under 119(e) from US provisional patent application number 60/075,519, with a like title and filed on February 23, 1998, the disclosure of which is incorporated herein by reference.

### FIELD OF THE INVENTION

The present invention relates to the display of three-dimensional image data sets, and in particular to raycasting.

### BACKGROUND OF THE INVENTION

Volumetric data sets are usually viewed by being projected unto a two dimensional surface. Two main types of projection systems are used: an orthographic projection, and a perspective projection. In a perspective projection, a single viewpoint is assumed, from which rays emanate and strike the surface. In an orthographic projection, these rays are all perpendicular to a common plane.

Some methods of rendering a volumetric data set onto a two dimensional surface utilize a z-buffer. The values in the z-buffer are equal to the length of rays from the projection point (plane) to the surface. One method of generating the z-buffer, namely raycasting, is applied by following a plurality of rays from their source (point or plane) until they terminate at a solid voxel. Once a z-buffer is generated, the voxels are projected unto the z-buffer and lighting calculations are made, using well known methods, such as described in "Computer Graphics Principles and Practice, Second Edition in C", by James D. Foley, et al., Addison-Wesly, 1996, the disclosure of which is incorporated herein by reference.

The data set is typically a binary data set, at least for the purposes of raycasting. The value of each voxel is generally assumed to be a discrete sample of a continuos spatial function at the center of that voxel. Thus, it is necessary to perform some type of interpolation to determine whether the ray is passing through a transparent voxel or has reached a boundary voxel. Unfortunately, high quality interpolations are generally slow. In addition, some high quality interpolations are not smooth. For example, a long series of values ... 010101010... will usually not be interpolated as a fixed value 0.5. Generally, some of the waviness of the data will remain after the interpolation, resulting in a wavy interpolation. This is in conflict with the general desire that the z-buffer should not contain frequencies of the order of one over a voxel dimension, because these frequencies are mainly artifacts caused by the limited spatial sampling of the volume.

Cubic interpolations are generally determined using four data points and four constraints. Two sets of constraints, known in the art are:

(1) $y(x_n)=y_n$; for n=1..4, where $x_n$ and $y_n$ are known and where x is between $x_2$ and $x_3$; and
(2) $y(x_2)=y_2$, $y(x_3)=y_3$, $y'(x_2)=(y_3-y_1)/(x_3-x_1)$ and $y'(x_3)=(y_4-y_2)/(x_4-x_2)$

### SUMMARY OF THE INVENTION

It is an object of some embodiments of the present invention to provide a method of ray-casting a voxel data set in which only a required accuracy of values for elements in a z-buffer is achieved. Preferably, the required accuracy is locally determined based on variations in the voxel data set. In one preferred embodiment of the invention, a reduced accuracy of determination of intersections between rays and solid voxels, i.e. the length of the rays, is allowed. Alternatively or additionally, reduced spatial resolution of the z-buffer is allowed, resulting in a less accurate value for the true distance between individual solid voxels and the view origin. Alternatively or additionally, a less accurate interpolation of data is allowed.

It is an object of some embodiments of the present invention, to provide a fast method of cubic interpolation, which is especially suitable for raycasting, but is also useful for other applications, especially those requiring smoothing of data.

It is an object of some preferred embodiments of the present invention, to provide a method of raycasting, in which the spacing of the rays is dependent on a surface variation of the voxel data. In a preferred embodiment of the invention, the method is applied to an image having a plurality of areas having low-contrast features, separated by sharp boundaries. Such images are typical of some types of medical images, where the act of segmentation creates sharp boundaries. Preferably, the spacing of the rays is decreased at the sharp boundaries and increased at the low-detail areas, thereby being adapted to the required accuracy of raycasting.

It is an object of some preferred embodiments of the present invention, to provide a method of raycasting in which the accuracy of determining the length of each ray is dependent on the surface variation.

It is another object of some preferred embodiments of the present invention to provide a method of raycasting, in which the length of a ray is iteratively determined.

It is another object of some preferred embodiments of the present invention to provide a method of raycasting, wherein the type of data interpolation used is adapted to the instant accuracy at which the ray is cast.

It is an object of some preferred embodiments of the invention, to provide a method of cubic interpolation which smoothes out the data, e.g., it smoothes a sequence such as ....0101010101010..., without leaving a residual ripple.

In accordance with a preferred embodiment of the present invention, a method of raycasting comprises casting rays in multiple spacing resolutions, starting at a coarse (large) spacing. Rays are added between rays of a previous step, depending on the gradient of data in the z-buffer. If the gradient is small, the z-buffer value is determined by interpolation, rather than by casting a new ray. In a preferred embodiment of the invention, the large spacing casting is applied to a reduced-resolution version of the data set, preferably into a low resolution z-buffer. Preferably, previously cast rays are re-cast, when the resolution of the z-buffer is increased. Preferably, the previously determined z-values are used as a starting point for the search for the solid voxel boundary-ray intersection location, in the finer spacing. Alternatively the raycasting is applied to the full resolution data set, even in the coarser spacing levels, so that the determined intersection location has a maximal accuracy. Preferably the coarsest spacing level is selected responsive to a statistical property of the data set.

In some preferred embodiments of the invention, externally provided information is used to determine the spacing of the cast rays, at the start of the casting and/or at the end of the casting and/or locally. In one preferred embodiment of the invention, information regarding the clinical interest of a portion of the data is available. Areas which are of more clinical interest are preferably ray cast with a smaller initial inter-ray spacing and/or a lower gradient threshold. In one preferred embodiment of the invention, areas of clinical interest are automatically identified by registering the data set with a previously interpreted data set in which areas of interest are indicated.

In a preferred embodiment of the invention, the inter-ray spacing and/or the gradient threshold and/or other factors which affect the accuracy of the raycasting are dependent on the ray length and/or on the angle between the ray and the voxel surface and/or on the relative location of the ray in the field of view. Preferably, a highest image quality is desired for voxels which are nearer the center of the field of view and within a certain range of distances from the viewing origin. Preferably, this higher image quality is attained by increasing the accuracy of determination of the z-buffer for these voxels. In a preferred embodiment of the invention, a user may enter parameters which define the required accuracy and/or relative image quality for voxels at different distances, angles and/or surface angles.

In accordance with a preferred embodiment of the present invention, additionally or alternatively to coarse ray-spacing, a reduced accuracy of ray length determination is allowed. In a preferred embodiment of the invention, the intersection between the ray and a voxel is searched for, other than by sequentially tracing along the ray. In one preferred embodiment of the invention, a suspected intersection between a ray and a voxel is determined using a reduced resolution data set, i.e., using a different granularity. Thereafter, a higher resolution data set is used to pin-point and/or remove the suspected intersection from consideration. Preferably, the process advances by increasing the resolution and determining, in the increased resolution data set, whether the front of the ray is beyond or in front of a solid voxel. Alternatively or additionally to modifying the resolution of the data set, other methods of modifying the accuracy of the intersection determination may be used, for example, the step size at which the ray is examined for intersections.

In accordance with a preferred embodiment of the invention, the type and/or quality of the interpolation used to determine an intersection between a voxel and a ray, is related to the accuracy at which the intersection is being determined. Higher quality (and slower) interpolations are used when the accuracy is high.

In accordance with a preferred embodiment of the invention, a novel cubic interpolation method is provided. One aspect of an interpolation method, in accordance with some preferred embodiments of the invention, is that it combines smoothing with interpolation. Preferably, the interpolation is determined by a number of constraints and different amounts of smoothing are effected by different constraints. In a preferred embodiment of the invention, at least some of the constraints are not smoothing constraints. Another aspect of an interpolation method, in accordance with some preferred embodiments of the invention, is that the interpolation is not constrained to pass through the points which are used for interpolation.

In accordance with a preferred embodiment of the invention, the interpolation is smoother than standard cubic interpolation. One advantage of a smooth interpolation relates to the method of data packing typically used for voxel data. Typically, more than one voxel is packed into a single machine word. In particular, when a bit volume is used to represent solid voxels, only a single bit is used for each voxel. Most computers have a computational difficulty with handling data which is not stored as a multiple of a byte or word size, especially when the data is stored as fractions of bytes. By performing smoothing as part of interpolation, significant amounts of memory and computations may be saved, especially with regard to unpacking data and storing such data after smoothing in an unpacked data array. It should be appreciated that in some preferred embodiments of the invention, interpolation with smoothing requires the same number of computational steps as does interpolation without smoothing.

In a preferred embodiment of the invention, the original data is never smoothed, so that it can be stored in a more memory efficient manner.

In a preferred embodiment of the invention, a three-dimensional approximation is applied as a plurality of one dimensional approximations. In a first step, a voxel cube of extent 4x4x4 is reduced to an interpolated voxel square of extent 4x4, by 16 parallel one-dimensional interpolations. The square is reduced to a (double interpolated) line of voxels, by 4 one-dimensional interpolations.

The line is reduced to a (triple) approximated voxel by a single application of a one-dimensional interpolation. In some preferred embodiments of the invention, fewer or additional voxels may be utilized for the interpolation, in order to affect the quality of the interpolation.

In a preferred embodiment of the invention, the data set is a medical data set.

**BRIEF DESCRIPTION OF THE DRAWINGS**

The present invention will be more clearly understood from the following detailed description of the preferred embodiments of the invention and from the attached drawings, in which:

Fig. 1A is a schematic illustration of raycasting from a point;

Fig. 1B is a schematic illustration of a z-buffer created by the raycasting of Fig. 1A;

Fig. 2 is a flowchart of a method of raycasting, in accordance with a preferred embodiment of the invention;

Fig. 3 is a flowchart of a method of ray length determination, in accordance with a preferred embodiment of the invention;

Fig. 4 is a flowchart of a method of reducing the number of cast rays, in accordance with a preferred embodiment of the invention; and

Fig. 5 is a diagram showing a method of determining a gradient, in accordance with a preferred embodiment of the invention.

**DETAILED DESCRIPTION OF THE PREFERRED EMBODIMENTS**

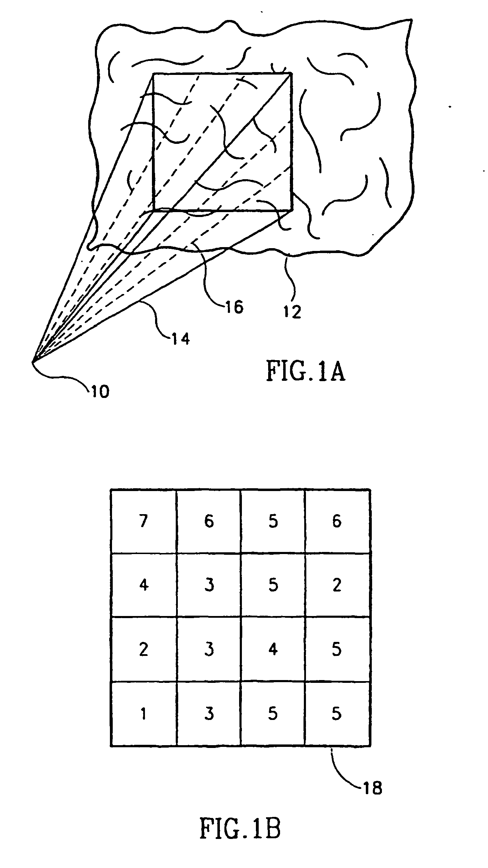

Fig. 1A is a schematic illustration of raycasting from a point 10, through a viewport 14. A plurality of rays 16 are cast towards a surface 12 which is defined by a dataset. Fig. 1B is a schematic illustration of a z-buffer 18 created by the raycasting of Fig. 1A.

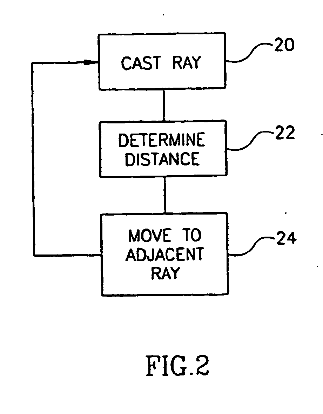

Fig. 2 is a flowchart of a method of raycasting, in accordance with a preferred embodiment of the invention. A ray 16 is cast (20). The distance between the ray and the nearest surface (the ray length) is determined (22) and entered into z-buffer 18. The process is repeated for a plurality of rays (24).

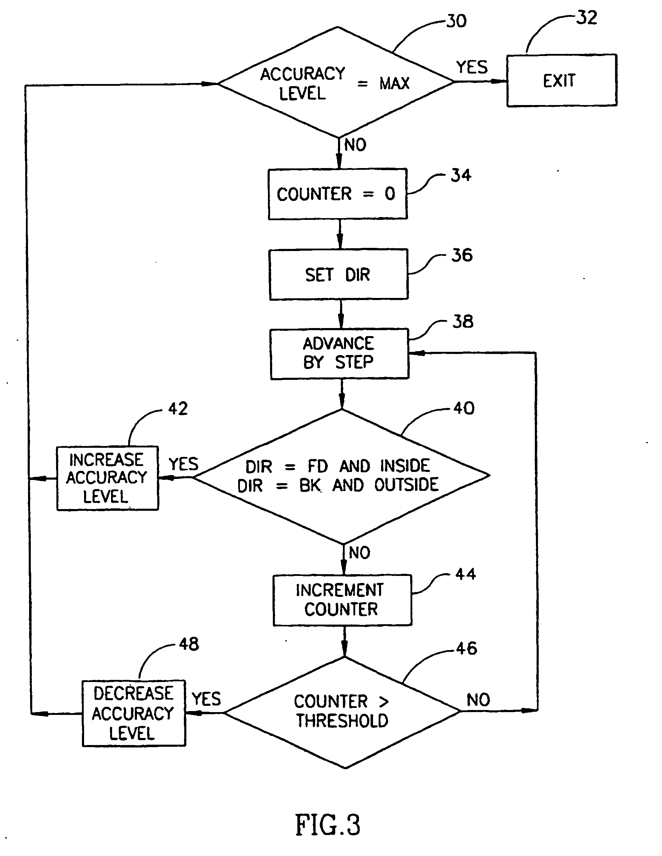

One aspect of some embodiments of the present invention relates to reducing the computational complexity of casting rays. Fig. 3 is a flowchart of a method of length determination, in accordance with a preferred embodiment of the invention. In the method of Fig. 3, the ray is cast with an increasing accuracy, to zero in on an intersection between a solid voxel and the cast ray. Preferably, if the intersection is not found at a higher accuracy level, e.g., it does not really exist, the accuracy level is reduced and the search for an intersection is continued utilizing the lower accuracy level. In a preferred embodiment of the invention, information regarding the data set is used to further reduce the computation time. For example, if a minimum distance between point 10 and the closest solid voxels of surface 12 is known, this is a lower bound on the length for any ray.

The method, as described in Fig. 3, is a state machine, which exits with the current position along a cast ray, once an intersection is found in the highest accuracy level (30). In a preferred embodiment of the invention, the highest accuracy level used is determined responsive to the length of the ray. Thus, far intersections are preferably determined with a lower precision than nearer intersections, since accuracy in determining far intersections affects the image quality to a lesser degree than closer intersections. In a preferred embodiment of the invention, the voxel data set (or portion of interest thereof) is surrounded with a fake border of solid voxels. When an intersection is determined, a check is made to see if the intersection is real or if it is caused by the cast ray exiting the voxel data set and intersecting with one of the "fake" voxels. Additionally or alternatively to the fake voxels enclosing the voxel data set, the fake voxels may be inserted into the voxel data set, for example, to enclose and/or to mask portions of the voxels data set. Preferably, the positions of the fake voxels satisfy mathematical relationship, so that it is simple to determine if a voxel, at a certain position, is a fake voxel. Alternatively, the fake voxels can be detected by matching against a special bit volume. It should be appreciated that due to the interpolation, a voxel position may be off by a small number of voxels, so that when a fake voxel is located close to a real voxel, the determination of the type of voxel/intersection is preferably made at a higher accuracy level. Preferably, the determination whether a current position is inside a real solid voxel or inside a fake solid voxels is a majority decision based on the number of neighboring voxels of each type.

In a preferred embodiment of the invention, a counter is set to zero (34), so that it is possible to limit the amount of time spent at high accuracy levels. The direction of advance along the ray is set to be either forward or backwards, depending on whether the current position is inside a solid voxel or outside one (38). Since a position along the ray is rarely exactly at a voxel center, the decision, as to whether a position is inside a solid voxel or outside of one, is usually based on an interpolation between neighboring voxels. Generally, if the value of the interpolation is over a certain threshold value, such as 0.5, the position is considered to be "inside"; otherwise, it is "outside". Preferably, if the position is inside (outside), the direction is set to be backwards (forwards).

The position is then advanced in the selected direction along the cast ray by a step (38). Preferably, the step size is smaller than a voxel at the current resolution, to avoid missing intersections. However, the maximum step size may depend on the interpolation scheme used. For example, if the interpolation scheme decides "inside" if any of the neighboring voxels (26 for parallelepiped voxels) is solid, the step size may be made larger than one voxel. In a preferred embodiment of the invention, the dataset is resampled and/or interpolated to the required resolution and/or step size. Alternatively, the voxel values are calculated on the fly from the original data set.

If the direction is forward and the current position is "inside" or if the direction is backwards and the current position is "outside", then a more thorough check of the locality of the position is preferably made to determine if there is an intersection between the ray and a solid voxel (40). The accuracy level is increased (42) and the process is repeated at this higher accuracy level (30). Preferably, a the current position is retraced one step prior to increasing the accuracy level. If the accuracy level is not increased, the process is continued by advancing another step (38) at the same accuracy level. Optionally, a counter is used to keep track of the number of steps performed in each accuracy level. If too many steps are required, it is usually desirable to return to a lower accuracy level, at which intersection determination is faster. Thus, the counter is incremented (44). If the counter is above a threshold (46), then the accuracy level is decreased (48) and the process is repeated at this lower accuracy level (30). Otherwise, the process is continued by advancing a step at the current accuracy level (38).

In accordance with a preferred embodiment of the invention, the step size (as a percentage of the voxel size at the current resolution) is a function of the accuracy level. For example, at a low accuracy level the step size might be one half the voxel size for that level, while at a higher accuracy level the step size might be one-tenth the voxel size. In some preferred embodiments of the invention, different accuracy levels also have different voxel sizes. Alternatively or additionally, the step size is a function of the distance from the view origin. Preferably, when the cast ray is further from the origin, the step is larger.

In a preferred embodiment of the invention, the step size is selected so that the accuracy of the gradient determination is substantially constant for all the rays. It should be appreciated that the gradient is a function of the ratio between the lengths of the rays (shown further below). Thus, for voxels which are double the distance from the origin as compared to other voxels, only half the ray-length accuracy is required, so that this ratio is determined with a constant precision.

Another aspect of some embodiments of the present invention relates to reducing the complexity of interpolation, responsive to the instant accuracy of the raycasting. Preferably, the quality and/or complexity of the interpolation is related to the accuracy level. Preferably, higher accuracy levels use higher quality interpolation schemes than lower accuracy levels. Preferably, the raycasting method is optimized so that roughly equal amounts of time are spent at each accuracy level. Generally, since fewer interpolations are performed at the higher accuracy levels, slower interpolation schemes can be afforded than at the lower accuracy levels. Slower schemes include those which have fewer artifacts, are smoother and/or are slower. In accordance with a preferred embodiment of the invention, the following three interpolation schemes are used:

    (a) nearest neighbor;
    (b) linear interpolation; and
    (c) cubic interpolation.

In other preferred embodiments of the invention, other interpolation methods may be used in addition to- or instead of- the above methods. In addition, the (computational) complexity of an interpolation scheme can also be affected by using integer, fixed point and/or various precision floating point representations. Alternatively or additionally, parametric interpolation schemes may be used. For example, nearest neighbor interpolation can look only at 6 or 18 neighbors rather than at 26, i.e. neighbors with shared facets, lines or vertexes. Linear interpolation can be one, two or three dimensional and may also be used with different numbers of neighbors.

In a preferred embodiment of the invention, a hierarchy of interpolation methods is set up to always err in the same direction. In one example, the interpolation methods err on the side of providing false positives, which mean extra computations, rather than false negatives, which might mean a missed intersection. For example, instead of a simple nearest neighbor, a voxel may be considered solid if any of its adjacent neighbors are solid. In a preferred embodiment of the invention, when a lower resolution data set is being generated, a voxel is assigned a value "1" (solid) even if only a single one of its constituent voxels is solid. Thus, even a single layer of solid voxels (in a high resolution data set) will still act as a boundary (when viewed as a low resolution data set). Alternatively, a different threshold number of solid neighboring voxels other than one may be used.

In a preferred embodiment of the invention, the interpolations used are also set up to err in a progressive manner with regard to the position of the intersection along the ray. Thus, if the low quality interpolation indicates that there is an intersection at a position A, the next higher quality interpolation indicates that the intersection is at point B and the third higher quality interpolation indicates that the intersection is at point C, then A, B and C will be in a linear order.

In a preferred embodiment of the invention, the count (used to decide on changing accuracy levels) is decided based on the type of interpolation used for the data at each accuracy level. In one example, such a decision may be based on the statistical probability of an intersection being determined at one location, using a first interpolation type for a first accuracy level and not being real or being offset along the ray, using a second interpolation type, for a second accuracy level. Additionally or alternatively, such a decision may be based on the effect of changing the step size and/or data set resolution between accuracy levels. Alternatively or additionally, the count may be based on an expected amount of offset of the intersection location, when changing accuracy levels.

As used herein regarding the method of intersection finding, an accuracy level may be determined by many factors, preferably by one or more of: the resolution of the dataset (voxel size and/or shape), the step size, the interpolation type and/or quality, the precision of arithmetic operations. In some preferred embodiments of the invention, the quality of an interpolation may be related to the number of neighbors used for the interpolation. Preferably, when the accuracy level is increased or decreased by one level, only one of the above factors will be changed, for example, only the step size or only the voxels dataset size. Preferably, increases in dataset resolution and step size are by multiples of two, however other multiplication factors, preferably based on statistical analysis, may be used.

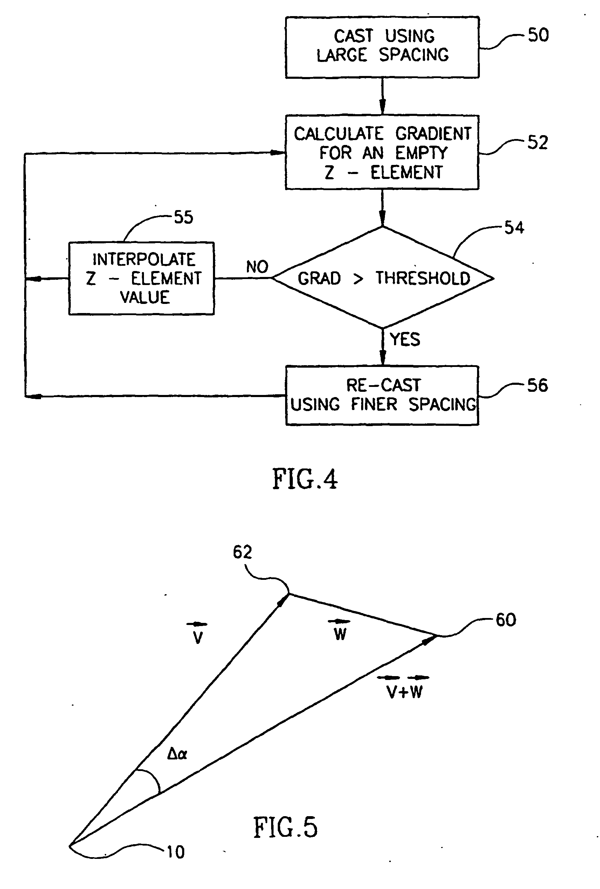

Another aspect of some embodiments of the present invention relates to reducing the number of cast rays. Fig. 4 is a flowchart of a method of reducing the number of cast rays, in accordance with a preferred embodiment of the invention. Instead of acquiring the entire z-buffer at a single spatial resolution, the resolution is preferably adapted to the variance in each part of the z-buffer. Thus, portions of the z-buffer which have a low variance are acquired using fewer raycastings. In accordance with a preferred embodiment of the invention, the entire Z-buffer is ray-cast using a large inter-ray spacing (50). The entire z-buffer is then examined at a higher spatial resolution, preferably double the ray-casting spatial resolution, so that three times as many z-buffer elements are examined as were ray-cast. For each empty z-element in the higher resolution, i.e., no ray was cast to it, the gradient is estimated from the z-values of its neighbors (52). For each element, if its gradient is above some predetermined threshold (54), it is re-cast (56). Otherwise, it is estimated by interpolation between its neighbors (55). The process is then preferably repeated until either all the z-elements have a gradient below the threshold or a maximum desirable raycasting resolution is achieved for all those z-elements with the high gradient.

In a preferred embodiment of the invention, the recasting is performed using a higher accuracy than in previous casting steps.

In one preferred embodiment of the invention, the density of ray-casting and z-buffer examination is even over the entire z-buffer. Alternatively, different portions of the z-buffer, such as those which have more clinical interest and/or have slower motion in the final field of view have a higher density of examination and/or ray-casting. Preferably, the inter-ray spacings for each pass are chosen so that three passes are required to examine every element in the z-buffer, however, other numbers of passes may also be used.

In accordance with a preferred embodiment of the invention, the entire z-buffer is repeatedly ray-cast.

Alternatively or additionally, each portion of the z-buffer is ray-cast, until a desired spatial resolution and/or z-element value accuracy is achieved. In a preferred embodiment of the invention, the ray-casting is started at a portion of the z-buffer. Subsequently, rays are cast surrounding this portion, at a distance estimated by extrapolation and/or interpolation of previously ray-cast portions of the buffer. Preferably, a portion of the z-buffer is ray-cast, if the local gradient is larger than a predetermined amount. As with interpolation of voxels values, in some preferred embodiments of the invention, different methods are used to estimate gradients at different stages. In a preferred embodiment of the invention, the quality of the estimation is dependent on the spacing of the ray-casting, i.e., on the instant accuracy of the acquisition of the z-buffer. Alternatively or additionally, the number of neighboring z-buffer used for estimation may also be varied, for example, using only 2, 4 or all 8 neighbors. In different passes, different neighbors may be used for the estimation. In addition, the estimation may be varied by making the estimation bi-linear or bi-cubic. Alternatively, the local gradient may be extrapolated from the neighbors on one side of the z-buffer element.

In a preferred embodiment of the invention, the voxel data set is ray-cast at different voxel sizes, at different raycasting steps, so that different resolution z-buffers, representing different inter-ray spacings of z-buffer elements, are acquired.

As can be appreciated, the above described methods may be applied to portions of the z-buffer and/or portions of the dataset. Preferably, portions of the dataset which are further from the viewing origin are cast at lower resolutions.

In a preferred embodiment of the invention, the same gradient threshold is used for all the passes on the z-buffer. Alternatively, a different gradient is used for different passes. Generally, the value of the gradient threshold determines the percentage of z-buffer elements which are ray-cast at each pass and is thus a focus of a time/quality tradeoff. Preferably, these thresholds are determined by statistical analysis of the data set and/or by examining the partially filled z-buffer to determine statistical properties of the generated image. Alternatively or additionally, the ratio of increase in ray density may be different when passing between a first pass and a second pass and when passing between a second pass and a third pass.

Another aspect of some preferred embodiments of the invention is that it is possible to trade-off between time and quality, simply by stopping the ray-casting. Thus, real-time rendering can be performed, even if there is an occasional unexpected processing load on the computer performing the rendering. The ray-length finding method maintains an approximate location of an intersection from the time it first finds an intersection. The z-buffer generation method maintains a partially filled z-buffer at every instant. Further, when there is extra time available, the quality of the ray-casting can be increased by raycasting into z-buffer elements which were interpolated and/or determining more precise intersection locations for rays for which a less than maximal accuracy was previously determined. Preferably the z-buffer elements to be ray-cast are selected by changing the threshold of the gradient.

Fig. 5 is a diagram showing a method of determining a gradient between two z-buffer elements, in accordance with a preferred embodiment of the invention, in a perspective projection. $\vec{v}$ is a vector representing a ray cast to a z-buffer element 62. $\vec{w}$ is a vector representing an offset to a neighboring (but not necessarily contiguous) z-buffer element 60. Topically, $\|\vec{w}\| << \|\vec{v}\|$. The ray to z-buffer element 60 is the sum $\vec{v}+\vec{w}$. The angle between the two cast rays is, to a first order approximation:

$$\Delta \alpha = \frac{\|\vec{w}\|}{\|\vec{v}\|} \sqrt{1 - \left(\frac{\vec{w} \cdot \vec{v}}{\|\vec{w}\| \cdot \|\vec{v}\|}\right)^2}$$

By denoting the length of the two rays (to voxels 62 and 60) as $l_1$ and $l_2$, respectively, the gradient is $(l_1-l_2)/(\Delta \alpha * (l_1+l_2)/2)$.

If the projection used is an orthographic projection, assuming that $\vec{v}+\vec{w}$ and $\vec{v}$ are perpendicular to the projection plane, the gradient is $(l_1-l_2)/\|\vec{w}\|$.

Another aspect of some embodiments of the present invention relates to a method of interpolation which includes smoothing. Applying the smoothing interpolation generally requires the same number of steps as does a non-smoothing interpolation. Thus, if smoothing is required, a smoothing interpolation method is to be desired. In addition, the interpolation is based on four values $y_1$, $y_2$, $y_3$ and $y_4$ for four equidistant points (along a one dimensional line) denoted as $x_1$, $x_2$, $x_3$ and $x_4$. The point to be interpolated, x, is between $x_2$ and $x_3$. A cubic polynomial y(x) is chosen, so as to satisfy four constraints:

(a)

$$y(x_2) = \frac{y_1 + 2y_2 + y_3}{4}$$

(b)

$$y(x_3) = \frac{y_2 + 2y_3 + y_4}{4}$$

(c)

$$y'(x_2) = \frac{y_3 - y_1}{x_3 - x_1}$$

(d)

$$y'(x_3) = \frac{y_4 - y_2}{x_4 - x_2}$$

In this preferred embodiment of the invention, the smoothing is applied only by the first two constraints. However, in other preferred embodiments of the invention, smoothing may be applied by any number of the constraints, for example, all four constraints, only one constraint or any two constraints. Additionally or alternatively, a different amount and/or type of smoothing may be applied by different constraints. As a result, the interpolation may be asymmetric. It should also be appreciated that higher order interpolations may also include smoothing. However, for most uses cubic interpolation is considered sufficient. By way of example, other possible smoothing constraints include $y(x_2)=(y_1+y_2+y_3)/3$ and $y'(x_2)=((y_4+y_3+y_2)/3-y_1)/(x_3-x_1)$.

It should be appreciated that the values on which the interpolation is performed may be stored as packed bit values. As such, it is generally not practical to first smooth the bit data and then perform interpolations. By performing the smoothing as part of the interpolation, significant savings in memory and/or computational steps may be achieved.

When the interpolation is applied in more than one dimension, the dimensions are preferably collapsed. As long as the interpolation is linear in the interpolated values, the order by which the dimensions are collapsed is not important. In one example, where the interpolation is applied to a three-dimensional space, a 4x4x4 cube is collapsed into a 4x4 square, by the application of 16 interpolations. The 4x4 square is collapsed into a 4-length line, by the application of 4 interpolations and the line is interpolated once, to determine the desired value.

It should be appreciated that when the number of originating elements between which the interpolation is performed is not a power of four, other interpolation methods may be applied. For example, if a 2x4 array is interpolated, two of the above described interpolations may be applied, followed by a single averaging and/or linear interpolation. Alternatively, four linear interpolations may be applied, followed by a single of the above described cubic interpolations.

In a preferred embodiment of the invention, the interpolation is performed using a look up table. Such a table is especially efficient, with regard to storage space, in the first collapsing of dimensions, since only four bits are required to enumerate all the possibilities of the interpolated voxels. In general, when performing computationally intensive tasks, it is desirable to use look-up tables, rather than perform computations, if possible.

In a preferred embodiment of the invention, the smoothing interpolation is applied without unpacking the data. This is preferably achieved by performing the interpolation first in the direction in which the bits are packed (e.g., the x-direction). Thus, a group of voxels can be converted, using a look-up table, directly into a value representing the interpolated value (in one dimension). In one preferred embodiment of the invention, a group of four bits, corresponding to four voxels, are extracted from the packed data and matched against the lookup table, preferably as a four-bit value. Alternatively, the look-up table includes an index which represents the location of the relevant four bits in the packed data.

It should be appreciated that the above described methods of raycasting, as described hereinabove, contain many features, not all of which need be practiced in all embodiments of the invention. Rather, various embodiments of the invention will utilize only some of the above described techniques, features or methods and or combinations thereof. In addition, although the above description is focused on methods, apparatus for performing these methods is also considered to be within the scope of the invention.

It should also be appreciated that the above described methods are not generally limited by the shape of the voxels, for example, they may be applied to parallelepiped voxels.

In accordance with a preferred embodiment of the invention, some of the above methods are applied towards ray-tracing, for example for finding intersections and/or for interpolating color values. However, it should be appreciated that there may be a significant reduction in image quality, as compared to regular ray tracing, especially in determining specular reflections, since some of the above methods are suitable for low contrast areas separated by high contrast borders, while specular reflections are typically high contrast areas.

It will be appreciated by a person skilled in the art that the present invention is not limited by what has thus far been described. Rather, the present invention is limited only by the claims which follow.

**Claims**

1. A method of determining a z-buffer value for a rendering of a voxel data set using a z-buffer, comprising:

   (a) adding a plurality of additional, non-image, solid voxels to said data set;
   (b) casting at least one ray to the voxel dataset, in the direction of at least one of said additional voxels;
   (c) determining an intersection between said ray and a solid voxel of said dataset;

   (d) determining if said solid voxel at said intersection is one of said additional voxels or a voxel of said voxel data set; and
   (e) updating said z-buffer with a value responsive to said determination of the voxel type.

2. A method according to claim 1, wherein said additional solid voxels enclose said voxel data set.

3. A method according to any of claims 1-2, wherein said data set is a medical data set

4. A method according to any of claims 1-3, wherein said additional solid voxels mask portions of said voxel data set.

5. A method according to any of claims 1-4, wherein the positions of said additional solid voxels satisfy a mathematical relationship and wherein said determining (d) comprises determining using said mathematical relationship.

6. A method according to any of claims 1-4, wherein said determining (d) comprises matching against a bit volume.

7. A method according to any of claims 1-6, wherein said determining (d) is made at a higher accuracy level than said determining (c).

8. A method according to any of claims 1-7, wherein said determining (d) comprises a majority decision based on a number of neighboring voxels of each type, additional or voxel data set.

9. Apparatus comprising computer means adapted for carrying out the method of any of claims 1-8.

**Patentansprüche**

1. Verfahren zum Bestimmen eines Z-Puffer-Wertes zum Abtasten eines Voxel-Datensatzes unter Verwendung eines Z-Puffers, umfassend:

   (a) Addieren einer Vielzahl von zusätzlichen, nicht bildhaften, soliden Voxels zu dem genannten Datensatz;
   (b) Richten wenigstens eines Strahls auf den genannten Voxel-Datensatz, und zwar in Richtung auf wenigstens einen der genannten zusätzlichen Voxels,
   (c) Bestimmen eines Schnittpunkts zwischen dem genannten Strahl und einem soliden Voxel des genannten Datensatzes;
   (d) Bestimmen, ob der solide Voxel an diesem Schnittpunkt einer der zusätzlichen Voxel oder ein Voxel des Voxel-Datensatzes ist und

(e) Erweitern des Z-Puffers mit einem Wert entsprechend der Bestimmung des Voxel-Typs.

2. Verfahren nach Anspruch 1, indem die zusätzlichen soliden Voxels den genannten Voxel-Datensatz einschließen.

3. Verfahren nach Anspruch 1 oder 2, indem der genannte Datensatz ein medizinischer Datensatz ist.

4. Verfahren nach einem der Ansprüche 1 bis 3, indem die zusätzlichen soliden Voxels Teile des genannten Voxel-Datensatzes maskieren.

5. Verfahren nach einem der Ansprüche 1 bis 4, indem die Positionen der genannten zusätzlichen soliden Voxels eine mathematische Beziehung erfüllen und dass das Voxel-Bestimmen (d) ein Bestimmen unter Verwendung der genannten mathematischen Beziehung umfasst.

6. Verfahren nach einem der Ansprüche 1 bis 4, indem das Voxel-Bestimmen (d) ein Abgleichen gegen ein Bit-Volumen umfasst.

7. Verfahren nach einem der Ansprüche 1 bis 6, indem das Voxel-Bestimmen (d) mit höherer Genauigkeit durchgeführt wird als das Schnittpunkt-Bestimmen (c).

8. Verfahren nach einem der Ansprüche 1 bis 7, indem das Voxel-Bestimmen (d) eine Mehrheitsentscheidung umfasst, basierend auf einer Anzahl von benachbarten Voxels von jedem Typ, zusätzlich oder Voxel-Datensatz.

9. Vorrichtung, umfassend eine Recheneinheit, die in der Lage ist, das Verfahren nach einem der Ansprüche 1 bis 8 auszuführen.

**Revendications**

1. Procédé de détermination d'une valeur de matrice Z ou « z-buffer » pour un rendu d'un ensemble de données de voxel utilisant une matrice Z, comprenant les étapes consistant à :

   (a) ajouter une pluralité de voxels pleins, non d'image, supplémentaires audit ensemble de données ;
   (b) lancer au moins un rayon vers l'ensemble de données de voxel, dans la direction d'au moins un desdits voxels supplémentaires ;
   (c) déterminer une intersection entre ledit rayon et un voxel plein dudit ensemble de données ;
   (d) déterminer si ledit voxel plein au niveau de ladite intersection est un desdits voxels supplémentaires ou un voxel dudit ensemble de données de voxel ; et
   (e) mettre à jour ladite matrice Z avec une valeur dépendant de ladite détermination du type de voxel.

2. Procédé selon la revendication 1, dans lequel lesdits voxels pleins supplémentaires entourent ledit ensemble de données de voxel.

3. Procédé selon l'une quelconque des revendications 1 à 2, dans lequel ledit ensemble de données est un ensemble de données médicales.

4. Procédé selon l'une quelconque des revendications 1 à 3, dans lequel lesdits voxels pleins supplémentaires masquent des portions dudit ensemble de données de voxel.

5. Procédé selon l'une quelconque des revendications 1 à 4, dans lequel les positions desdits voxels pleins supplémentaires satisfont à une relation mathématique, et dans lequel ladite détermination (d) comprend une détermination à l'aide de ladite relation mathématique.

6. Procédé selon l'une quelconque des revendications 1 à 4, dans lequel ladite détermination (d) comprend une comparaison avec un volume binaire.

7. Procédé selon l'une quelconque des revendications 1 à 6, dans lequel ladite détermination (d) est effectuée à un niveau de précision plus élevé que ladite détermination (c).

8. Procédé selon l'une quelconque des revendications 1 à 7, dans lequel ladite détermination (d) comprend une décision à la majorité basée sur un nombre de voxels avoisinants de chaque type, supplémentaire ou de l'ensemble de données de voxel.

9. Appareil comprenant un moyen informatique adapté pour exécuter le procédé selon l'une quelconque des revendications 1 à 8.

FIG.1A

| 7 | 6 | 5 | 6 |
|---|---|---|---|
| 4 | 3 | 5 | 2 |
| 2 | 3 | 4 | 5 |
| 1 | 3 | 5 | 5 |

FIG.1B

FIG.2

FIG.3

FIG.4

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60075519 B

**Non-patent literature cited in the description**

- **JAMES D. FOLEY et al.** Computer Graphics Principles and Practice. Addison-Wesly, 1996